# FASCICULE DE BREVET EUROPEEN

(11) **EP 0 807 339 B1**
(45) Date de publication et mention de la délivrance du brevet: **24.10.2001**
(21) Numéro de dépôt: 96901396.0
(22) Date de dépôt: 16.01.1996
(51) Int. Cl.: H04B 7/185

(54) **COMMUNICATIONS PERSONNELLES A L'AIDE DE SATELLITES GEOSTATIONNAIRES ET DE SATELLITES DEFILANTS BASSES ORBITES**
PERSÖNLICHE KOMMUNIKATION MIT GEOSTATIONÄREN SATELLITEN UND SATELLITEN MIT NIEDRIGER UMLAUFBAHN
PERSONAL COMMUNICATIONS VIA LOW-ORBITING MOVING AND GEOSTATIONARY SATELLITES

(30) Priorité: 02.02.1995 FR 9501206
(43) Date de publication de la demande: 19.11.1997
(73) Titulaire: ALCATEL, 75008 Paris (FR)
(72) Inventeur: Blachier, Bruno, 92200 Neuilly sur Seine (FR)
(74) Mandataire: Smith, Bradford Lee
(86) Numéro de dépôt international: FR9600066
(87) Numéro de publication internationale: WO9624199

(56) Documents cités:
- EP-A- 0 325 429
- WO-A-88/04866
- US-A- 4 809 935
- PROCEEDINGS OF THE GLOBAL TELECOMMUNICATIONS CONFERENCE (GLOBECOM), HOUSTON, NOV. 29 - DEC. 2, 1993, vol. 1 OF 4, 29 Novembre 1993, INSTITUTE OF ELECTRICAL AND ELECTRONICS ENGINEERS, pages 574-578, XP000428119 DOSIERE F ET AL: "A MODEL FOR THE HANDOVER TRAFFIC IN LOW EARTH-ORBITING (LEO) SATELLITE NETWORKS FOR PERSONAL COMMUNICATIONS"
- PROCEEDINGS OF THE GLOBAL TELECOMMUNICATIONS CONFERENCE (GLOBECOM), SAN FRANCISCO, NOV. 28 - DEC. 2, 1994, vol. 3 OF 3, 28 Novembre 1994, INSTITUTE OF ELECTRICAL AND ELECTRONICS ENGINEERS, pages 1369-1374, XP000488756 PENNONI G: "JOCOS: 6 + 1 SATELLITES FOR GLOBAL MOBILE COMMUNICATIONS"

## Description

Le domaine de l'invention concerne l'utilisation de satellites pour permettre à des personnes munies d'un poste portable ou mobile de communiquer avec les réseaux de communications publics ou privés.

La technique antérieure soit utilise des systèmes au sol, soit utilise, comme dans les systèmes évoqués dans le document "Proceedings of the Global Telecommunications Conference (GLOBECOM) Nov 28 - Dec. 2, 1994, vol.3, pages 1369-1374, soit un réseau de satellites géostationnaires, soit un réseau de satellites basses orbites, dans le contexte d'un système de radiocommunications pour utilisateurs de postes portables ou mobiles.

On connait par ailleurs par le document EP-A-0 325 429, un système de communications à accès multiple entre un engin spatial en orbite géostationnaire et d'autres engins spatiaux situés dans des orbites terrestres basses, comprenant au moins une station au sol et une liaison montante entre cette station et l'engin en orbite géostationnaire.

L'invention revendique l'utilisation de satellites géostationnaires pour réaliser la transmission des réseaux de communications publics ou privés vers les postes portables ou mobiles et de satellites défilants pour réaliser la transmission des postes portables ou mobiles vers les réseaux de communications.

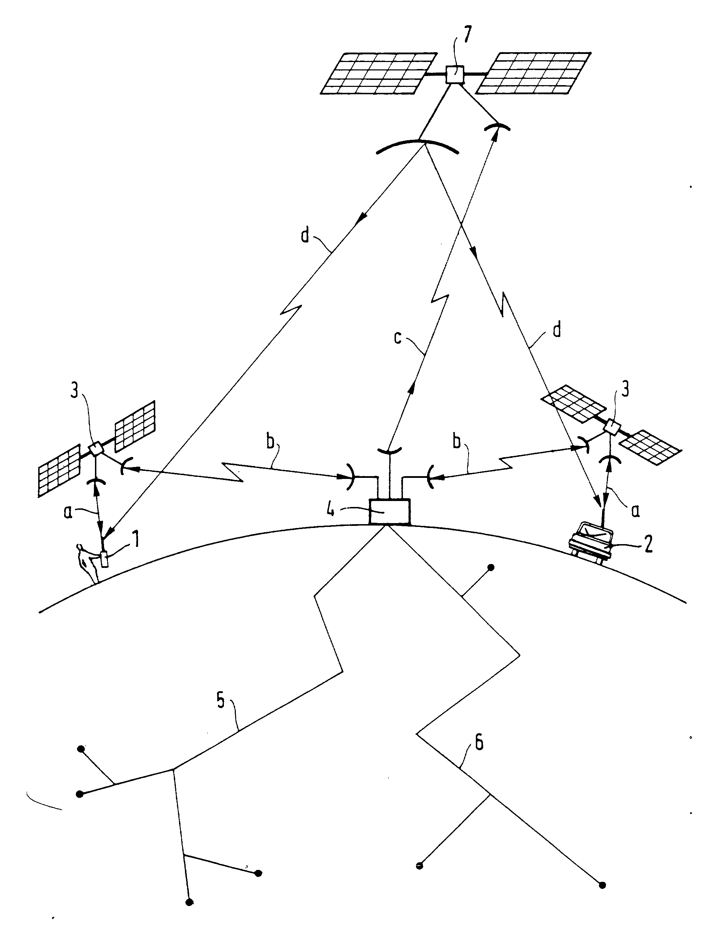

La figure 1 présente le cheminement des informations entres les satellites.

La figure 1 indique le fonctionnement du système de communications revendiqué.

Les postes portables (1) ou mobiles (2) montés sur véhicules ou avions émettent suivant les trajets (a) leurs informations vers les satellites défilants (3).

Ces derniers reçoivent ces signaux et, avec ou sans traitement à leur bord, les retransmettent vers des stations au sol (4) qui sont les entrées vers les réseaux publics (5) ou privés (6), ceci se faisant suivant le trajet (b) sur la figure 1.

Ces mêmes stations au sol (4) émettent les signaux en provenance de réseaux publics (5) ou privés (6) vers des satellites ou un satellite géostationnaire (7), ceci suivant le trajet (c) sur la figure 1.

Les satellites (7) retransmettent ces informations vers les postes portables ou mobiles suivant le trajet marqué (d) sur la figure 1 après avoir effectué ou pas effectué un traitement des signaux à leur bord.

L'invention permet de réaliser des échanges d'informations à faible débit (ou moyen) dans les trajets (a) (b), mais à fort débit dans les trajets (c) (d) offrant la possibilité du mutimédia aux mobiles et aux portables.

## Revendications

1. Système de radiocommunications au moyen de satellites défilants basses orbites (3) et d'au moins un satellite géostationnaire (7), comprenant au moins un station au sol (4) et une liaison montante entre ladite au moins une station au sol (4) et ledit au moins un satellite géostationnaire (7), **caractérisé en ce que** la transmission s'effectue suivant des premier et second trajets, ledit premier trajet (a, b) comprenant un trajet d'échanges (a) entre des postes portables (1) ou mobiles (2) et lesdits satellites défilants basses orbites (3) et un trajet d'échanges (b) entre lesdits satellites défilants basses orbites (3) et ladite au moins une station au sol (4) ; et ledit second trajet (c,d) comprenant un trajet montée (c) de ladite au moins une station au sol (4) vers ledit satellite géostationnaire (7) et un trajet descente (d) depuis ledit satellite géostationnaire (7) vers lesdits postes portables (1) ou mobiles (2).

2. Système de radiocommunications selon la revendication 1, **caractérisé en ce que** ledit trajet d'échanges (a) entre lesdits postes portables (1) ou mobiles (2) et lesdits satellites défilants basses orbites (3) et ledit trajet d'échanges (b) entre lesdits satellites défilants basses orbites (3) et ladite au moins une station au sol (4) consistent à passer des débits faibles ou moyens et **en ce que** le trajet montée (c) de ladite au moins une station au sol (4) vers ledit au moins un satellite géostationnaire (7) et ledit trajet descente (d) depuis ledit au moins un satellite géostationnaire (7) vers lesdits postes portables (1) ou mobiles (2) consistent à passer des débits forts.

3. Système de radiocommunications selon la revendication 1 ou la revendication 2, **caractérisé en ce que** ladite au moins une station au sol (4) constitue une station d'entrée / sortie vers des réseaux publics (5) ou privés (6) avec lesquels sont connectés lesdits postes portables (1) ou mobiles (2).

4. Système de radiocommunications selon l'une quelconque des revendications 1 à 3, **caractérisé en ce que** ledit trajet d'échanges (a) entre lesdits postes portables (1) ou mobiles (2) et lesdits satellites défilants basses orbites (3) est un trajet montée et ledit trajet d'échanges (b) entre lesdits satellites défilants basses orbites (3) et ladite au moins une station au sol (4) est un trajet descente depuis lesdits satellites défilants basses orbites (3) vers ladite au moins une station au sol (4).

5. Système de radiocommunications selon l'une quelconque des revendications 1 à 4, **caractérisé en ce qu'**il est apte à l'envoi d'informations multimédia vers les postes portables (1) ou mobiles (2).

## Patentansprüche

1. Funk-Kommunikationsystem mit Satelliten in niedriger Umlaufbahn (3) und wenigstens einem geostationären Satelliten (7), mit wenigstens einer Bodenstation (4) und einer Aufwärtsverbindung zwischen der wenigstens einen Bodenstation (4) und dem wenigstens einen geostationären Satelliten (7), **dadurch gekennzeichnet, dass** die Übertragung auf ersten und zweiten Wegen erfolgt, wobei der erste Weg (a, b) einen Austauschweg (a) zwischen transportablen (1) oder mobilen Stationen (2) und den Satelliten in niedriger Umlaufbahn (3) und einen Austauschweg (b) zwischen den Satelliten in niedriger Umlaufbahn (3) und der wenigstens einen Bodenstation (4) umfasst und der zweite Weg (c, d) einen Aufwärtsweg (c) von der wenigstens einen Bodenstation (4) zu dem geostationären Satelliten (7) und einen Abwärtsweg (d) von dem geostationären Satelliten (7) zu den transportablen (1) oder mobilen Stationen (2) umfasst.

2. Funk-Kommunikationsystem nach Anspruch 1, **dadurch gekennzeichnet, dass** der Austauschweg (a) zwischen den transportablen (1) oder mobilen Stationen (2) und den Satelliten in niedriger Umlaufbahn (3) und der Austauschweg (b) zwischen den Satelliten in niedriger Umlaufbahn (3) und der wenigstens einen Bodenstation (4) darin bestehen, niedrige oder mittlere Raten zu übertragen, und dass der Aufwärtsweg (c) von der wenigstens einen Bodenstation (4) zu dem wenigstens einen geostationären Satelliten (7) und Abwärtsweg (d) von dem wenigstens einen geostationären Satelliten (7) zu den transportablen (1) oder mobilen Stationen (2) darin besteht, hohe Raten zu übertragen.

3. Funk-Kommunikationsystem nach Anspruch 1 oder Anspruch 2, **dadurch gekennzeichnet, dass** die wenigstens eine Bodenstation (4) eine Eingangs/Ausgangsstation zu öffentlichen (5) oder privaten Netzen (6) bildet, mit denen die transportablen (1) oder mobilen Stationen (2) verbunden sind.

4. Funk-Kommunikationsystem nach einem beliebigen der Ansprüche 1 bis 3, **dadurch gekennzeichnet, dass** der Austauschweg (a) zwischen den transportablen (1) oder mobilen Stationen (2) und den Satelliten in niedriger Umlaufbahn (3) ein Aufwärtsweg ist und der Austauschweg (b) zwischen den Satelliten in niedriger Umlaufbahn (3) und der wenigstens einen Bodenstation (4) ein Abwärtsweg von den Satelliten in niedriger Umlaufbahn (3) zu der wenigstens einen Bodenstation (4) ist.

5. Funk-Kommunikationsystem nach einem der beliebigen der Ansprüche 1 bis 4, **dadurch gekennzeichnet, dass** es geeignet ist für die Übertragung von Multimedia-Informationen zu den transportablen (1) oder mobilen Stationen (2).

## Claims

1. A radio communications system by means of moving satellites (3) in low orbit, and at least one geostationary satellite (7), the system comprising at least one ground station (4) and an up link between said at least one ground station (4) and said at least one geostationary satellite (7), the system being **characterized in that** transmission takes place over first and second paths, said first path (a, b) comprising a data interchange path (a) between hand-held or mobile stations (1, 2) and said moving satellites (3) in low orbit, and a data interchange path (b) between said moving satellites (3) in low orbit and said at least one ground station (4); and said second path (c, d) comprising an up path (c) from said at least one ground station (4) to said geostationary satellite (7) and a down path (d) from said geostationary satellite (7) to said hand-held or mobile stations (1, 2).

2. A radiocommunications system according to claim 1, **characterized in that** said data interchange path (a) between said hand-held or mobile stations (1, 2) and said moving satellites (3) in low orbit, and said data interchange path (b) between said moving satellites (3) in low orbit and said at least one ground station (4) consist in passing data at low or medium rates, and **in that** the up path (c) from said at least one ground station (4) to said at least one geostationary satellite (7) and said down path (d) from said at least one geostationary satellite (7) to said hand-held or mobile stations (1, 2) consist in passing data at high rates.

3. A radiocommunications system according to claim 1 or claim 2, **characterized in that** said at least one ground station (4) constitutes a gateway to public or private networks (5, 6) with which said hand-held or mobile stations (1, 2) are connected.

4. A radiocommunications system according to any one of claims 1 to 3, **characterized in that** said data interchange path (a) between said hand-held or mobile stations (1, 2) and said moving satellites (3) in low orbit is an up path, and said data interchange path (b) between said moving satellites in low orbit (3) and said at least one ground station (4) is a down path from said moving satellites (3) in low orbit to said at least one ground station (4).

5. A radiocommunications system according to any one of claims 1 to 4,
**characterized in that** it is suitable for sending multimedia information to the hand-held or mobile stations (1, 2).
